# EUROPEAN PATENT APPLICATION

(11) **EP 4 624 424 A1**
(43) Date of publication of application: **01.10.2025**
(21) Application number: 25160757.8
(22) Date of filing: 27.02.2025
(51) Int. Cl.: C01G 53/50

(54) **POSITIVE ELECTRODE ACTIVE MATERIAL, POSITIVE ELECTRODE, SODIUM ION BATTERY, BATTERY ASSEMBLY, AND ELECTRIC SYSTEM**

(30) Priority: 29.03.2024 CN 202410383621
(71) Applicant: BYD Company Limited, Shenzhen, Guangdong 518118 (CN)
(72) Inventor: TIAN, Yecheng, Shenzhen, 518118 (CN); HE, Kefeng, Shenzhen, 518118 (CN); LIU, Qiannan, Shenzhen, 518118 (CN); GE, Liping, Shenzhen, 518118 (CN); BAO, Chunxiao, Shenzhen, 518118 (CN)
(74) Representative: Mathys & Squire

(57) **Abstract**

A positive electrode active material, a positive electrode, a sodium ion battery, a battery assembly, and an electric system are disclosed. The positive electrode active material meets the following condition. The compression resilience ε of the positive electrode active material ranges from 3% to 10%, where the compression resilience ε=1- (post-recovery compaction density/maximum compaction density). As a result, the material is promoted to maintain structural stability and integrity during the electrochemical process, thus greatly improving the cycle performance.

## Description

### FIELD

The present disclosure relates to the technical field of sodium ion batteries, and specifically to a positive electrode active material, a positive electrode, a sodium ion battery, a battery assembly, and an electric system.

### BACKGROUND

The global abundance of sodium is much higher than that of lithium, and sodium ion batteries have a greater cost advantage compared to lithium ion batteries. However, the cycle performance of existing sodium ion batteries is poor, which limits the use of sodium ion batteries. The cycle stability of a battery is limited by the toughness of the positive electrode active material of the battery. The toughness of the material is beneficial to the maintenance of the stability and integrity of the structure of the material during the electrochemical process. Compression resilience is a parameter that can reflect well the toughness of the positive electrode active material. Therefore, how to control the compression resilience of the positive electrode active material in a sodium ion battery is critical.

### SUMMARY

An object of the present disclosure is to provide a positive electrode active material, a positive electrode, a sodium ion battery, a battery assembly, and an electric system, to solve the problem of poor cycle performance of sodium ion batteries.

To accomplish the object of the present disclosure, the present disclosure adopts the following technical solutions:

In a first aspect, the present disclosure provides a positive electrode active material. The positive electrode active material meets the following condition. The compression resilience ε of the positive electrode active material ranges from 3% to 10%, wherein the compression resilience ε=1- (post-recovery compaction density/maximum compaction density).

Because the resilience performance of the material is related to the toughness of the material and represents the resilient change before and after the application of a certain pressure (compression-decompression), a material with higher compression resilience has greater plasticity. Therefore, by setting the compression resilience of the positive electrode active material within the above range, the positive electrode active material can be ensured to maintain the original shape and structure as much as possible during the ion deintercalation process of the positive electrode active material. The positive electrode active material itself has a certain toughness. The toughness is beneficial to the maintenance of the stability and integrity of the structure of the material during the electrochemical process, thus greatly improving the cycle performance.

In an embodiment, the compression resilience ε of the positive electrode active material ranges from 5% to 10%.

In an embodiment, the maximum compaction density of the positive electrode active material ranges from 3.0 g/cm³ to 3.6 g/cm³.

In an embodiment, the maximum compaction density of the positive electrode active material ranges from 3.2 g/cm³ to 3.6 g/cm³.

In an embodiment, the positive electrode active material includes a sodium ion-layered transition metal oxide.

In an embodiment, the positive electrode active material has a general structural formula of NaₓAO₂, where A is one or more of Ni, Cu, Fe, Mn, Co, Cr, Li, Mo, Sn, Zn, Zr, Nb, Ru, Y, W, Al, Mg, Ti, Ca, Sr, Ir, Ba, and V, and 0.7≤x≤1.2.

In an embodiment, x meets 0.9≤x≤1.02.

In an embodiment, the positive electrode active material is one or more of a single crystal, a quasi-single crystal, and a polycrystal.

In a second aspect, the present disclosure provides a positive electrode. The positive electrode includes a current collector and a positive electrode active material according to the first aspect arranged on the current collector.

In a third aspect, the present disclosure provides a sodium ion battery, which includes a positive electrode according to the second aspect.

In a fourth aspect, the present disclosure provides a battery assembly, which includes a sodium ion battery according to the third aspect.

In a fifth aspect, the present disclosure provides an electric system, which includes a sodium ion battery according to the third aspect or a battery assembly according to the fourth aspect.

### BRIEF DESCRIPTION OF THE DRAWINGS

In order to more clearly explain the technical solutions in the embodiments of the present disclosure or in the prior art, the drawings used in the description of the embodiments or the prior art will be briefly described below. Obviously, the drawings depicted below are merely some embodiments of the present disclosure, and those skilled in the art can obtain other drawings based on these drawings without any creative efforts.
FIG. 1 is a schematic cross-sectional view showing the structure of a positive electrode according to an embodiment;
FIG. 2 is a schematic diagram showing the calculation of the resilience ε of a positive electrode active material according to an embodiment; and
FIG. 3 is an SEM image of a positive electrode active material according to an embodiment.

### DETAILED DESCRIPTION

The technical solutions in embodiments of the present disclosure are clearly and completely described in the following with reference to the accompanying drawings in the embodiments of the present disclosure. It will be appreciated that, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Unless otherwise defined, all technical and scientific terms used herein have the same meaning as commonly understood by persons skilled in the art. The terms used in the description of the present disclosure are for the purpose of describing particular embodiments only and are not intended to limit the present disclosure. The term "and/or" as used in the present disclosure includes any and all combinations of one or more of the listed related items.

Embodiments of the present disclosure will be described in detail below with reference to accompanying drawings. The embodiments and the features in the embodiments may be combined with each other without conflict.

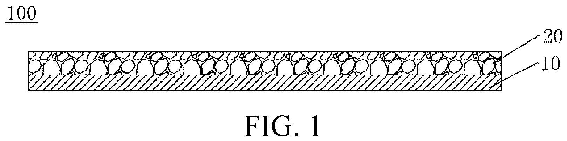

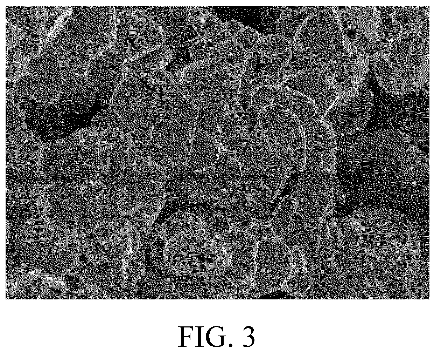

The present disclosure provides a positive electrode 100, which includes a current collector 10 and a positive electrode active material arranged on the current collector 10, as shown in FIGs 1 and 3. The positive electrode active material contains sodium ions.

Specifically, the positive electrode 100 may be a sodium ion positive electrode, and the positive electrode 100 is used in a sodium ion battery. After the positive electrode 100 is formed, the current collector 10 has a positive electrode active material layer 20 thereon, and the positive electrode active material layer 20 includes a positive electrode active material, a conductive agent, and a binder. The positive electrode active material is an active ingredient in the sodium ion battery and used to provide sodium ions.

In the fabrication process of the positive electrode 100, a positive electrode slurry is applied onto the current collector 10, and then rolled and heated to form the positive electrode active material layer 20. The positive electrode slurry contains all materials in the positive electrode active material layer 20.

Optionally, the current collector 10 may be a foamed metal mesh, or a metal film, etc., specifically including any one of a copper foil and an aluminum foil.

Optionally, the conductive agent may be one or more of carbon nanotubes (CNTs), single-walled carbon nanotubes (SWCNTs), conductive carbon black (SP) and graphene. The binder may be one or more of polyvinylidene fluoride (PVDF), carboxymethyl cellulose (CMC), styrene-butadiene rubber (SBR) and polyacrylic acid (PAA).

Optionally, the content of the positive electrode active material in the slurry is not less than 95% by weight, the content of the conductive agent is not higher than 2% by weight, and the content of the binder is not higher than 3% by weight.

Optionally, the areal density of the positive electrode 100 is not less than 340 g/m², and the compaction density of the positive electrode 100 is not less than 2.9 g/cm³.

The positive electrode active material of the present disclosure meets the following condition. The compression resilience ε of the positive electrode active material ranges from 3% to 10%, wherein the compression resilience ε=1- (post-recovery compaction density/maximum compaction density).

The compression resilience ε of the positive electrode active material ranges from 3% to 10%, and may be, but is not limited to, 3%, 4%, 5%, 6%, 7%, 8%, 9%, and 10%.

Understandably, the positive electrode active material layer will rebound after rolling, that is, some positive electrode active materials will return to the state before rolling. The resilience of the positive electrode active material is the degree to which the density decreases when the pressure is released after the positive electrode active material is rolled to the maximum compaction density. As the resilience increases, the positive electrode active material deformed by compression is more likely to return to its original state.

During the cycle process of the layered positive electrode active material of the sodium battery, cracking and pulverization will occur due to the constant deintercalation and intercalation of sodium ions. In industry, the material skeleton is often toughened and modified by doping various elements or optimizing the sintering process, so as to improve the structural stability of the material and thus improve the cycle performance. Due to the small amount of doping elements, there is difficulty in macroscopically characterizing the stability of the material matrix.

Because the resilience performance of the material is related to the toughness of the material and represents the resilient change before and after the application of a certain pressure (compression-decompression), a material with a higher compression resilience has a greater plasticity. Therefore, by setting the compression resilience of the positive electrode active material within the above range, the positive electrode active material can be ensured to maintain the original shape and structure as much as possible during the ion deintercalation process of the positive electrode active material. The positive electrode active material itself has a certain toughness. The toughness is beneficial to the maintenance of the stability and integrity of the structure of the material during the electrochemical process, thus greatly improving the cycle performance.

The compression resilience ε of the positive electrode active material in the battery can be tested by the following methods.
1) After the battery is discharged to 1.5V at a low current (such as 0.05C/0.1C/0.2C), it is disassembled in an inert environment and the positive electrode sheet is removed.
2) The positive electrode sheet is washed with an organic solvent, in which the solvent may be one or more of an alcohol, an ester, or an ether, etc. Then, the positive electrode sheet is scraped to obtain the powder of the positive electrode material. The scraped powder of the positive electrode material is ultrasonically washed for 10 min, and the upper floating matter is removed. Then, the solvent is added again, and the powder is ultrasonically washed for 10 min. The washing is repeated three times. The bottom material is collected and dried under vacuum until the moisture content in the powder is less than 500 ppm. Thus, the test positive electrode active material is obtained. The compression resilience of the test positive electrode active material is determined.

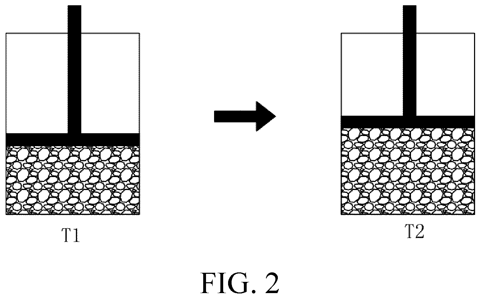

For example, as shown in FIG. 2, a preset weight (e.g., 1.0 g) of the positive electrode active material is filled in a mold, vibrated at a frequency of 300 times/min until the density of the positive electrode active material reaches a tap density (e.g., 3 g/cm³), and then compressed at a constant speed (e.g., 10 mm/min), until the density of the positive electrode active material reaches the maximum compaction density (e.g., 3.6 g/cm³, T1 in FIG. 2). Then, the pressure is released. After the movement of the compression surface due to elasticity stops, the density after pressure release (that is, the post-recovery compaction density) (T2 in FIG 2), is determined. From the obtained values, the compression resilience is calculated according to the formula compression resilience ε=1- (post-recovery compaction density/maximum compaction density).

The tap density is tested as follows. A certain amount of a powder is charged into a container, and vibrated under certain conditions, until the volume of powder in the container does not decreases any longer. The volume of powder is read, and the tap density is obtained by dividing the weight of the powder by the volume. The tap density test is carried out according to GB/T 31057.2-2018 Granular materials-Physical properties-Part 2: Determination of tap density. Test apparatus: BT-1001 intelligent powder characteristic tester. The positive electrode active material of weight m is weighed and filled in a test container in such a manner that the surface is kept as horizontal as possible. Then the powder is vibrated at a frequency of 300 times/min until the volume of the positive electrode active material does not decrease any longer. At this time, the powder volume v is read, and the tap density = m/v g/cm³.

In an embodiment, the compression resilience ε of the positive electrode active material ranges from 5% to 10%. Optionally, the compression resilience ε of the positive electrode active material may be, but is not limited to, 5%, 5.5%, 6%, 6.5%, 7%, 7.5%, 8%, 8.5%, 9%, 9.5%, and 10%. When the compression resilience is met, the stability and integrity of the positive electrode active material can be further ensured, to achieve a high cycle performance.

In an embodiment, the maximum compaction density of the positive electrode active material ranges from 3.0 g/cm³ to 3.6 g/cm³, and may be, but is not limited to, 3.0 g/cm³, 3.05 g/cm³, 3.1 g/cm³, 3.15 g/cm³, 3.2 g/cm³, 3.25 g/cm³, 3.3 g/cm³, 3.35 g/cm³, 3.4 g/cm³, 3.45 g/cm³, 3.5 g/cm³, or 3.6 g/cm³.

During the manufacturing process of the power battery, the compaction density has a great influence on the battery performance. Experiments show that the compaction density is closely related to the specific capacity, efficiency, internal resistance and cycle performance of the battery. Finding the optimum compaction density is very important for battery design. Generally, as the compaction density increases, the capacity of the battery increases. Therefore, the compaction density is also regarded as one of the reference indexes of the energy density of the material. The compaction density is not only related to the particle size and density, but also related to the particle gradation. Generally, particles with high compaction density have good normal distribution. It can be considered that given certain process conditions, the capacity of the battery increases with increasing compaction density.

In an embodiment, the maximum compaction density of the positive electrode active material ranges from 3.2 g/cm³ to 3.6 g/cm³. Optionally, the maximum compaction density of the positive electrode active material may be, but is not limited to, 3.2 g/cm³, 3.25 g/cm³, 3.3 g/cm³, 3.35 g/cm³, 3.4 g/cm³, 3.45 g/cm³, 3.5 g/cm³, 3.55 g/cm³, and 3.6 g/cm³. If the maximum compaction density is met, the positive electrode active material can be further ensured to have a higher capacity.

In an embodiment, the positive electrode active material includes a sodium ion-layered transition metal oxide.

In an embodiment, the positive electrode active material has a general structural formula of NaₓAO₂, where A is one or more of Ni, Cu, Fe, Mn, Co, Cr, Li, Mo, Sn, Zn, Zr, Nb, Ru, Y, W, Al, Mg, Ti, Ca, Sr, Ir, Ba, and V, and 0.7≤x≤1.2.

In an embodiment, x meets 0.9≤x≤1.02. Optionally, the specific value of x may be 0.9, 0.91, 0.92, 0.93, 0.94, 0.95, 0.96, 0.97, 0.98, 0.99, 1, 1.01, and 1.02.

In an embodiment, the positive electrode active material is one or more of a single crystal, a quasi-single crystal, and a polycrystal.

In an embodiment, the positive electrode active material is prepared by a method as follows.
a) M source(s) is/are precipitated to form a first precursor of M sources, where the precipitation temperature is 30 to 80°C, and the precipitation time is 4 to 24 h.
b) The precursor of M source(s) is mixed with a sodium source, and subjected to solid-phase sintering at 600 to 1100°C for 10 to 24 h, to obtain a second precursor.
c) The second precursor is subjected to solid-phase sintering at 300 to 800°C for 10 to 24 h.

In Step a), the M source(s) may include one or more metal sources.

In Step b), the M source(s) can be mixed with other doping elements besides the sodium source. That is, Step b) may further include the following steps. The precursor of M sources is/are mixed with the sodium source and other doping elements, and subjected to solid-phase sintering at 600 to 1100°C for 10 to 24 h to obtain the second precursor.

In Step c), the second precursor may be mixed with a coating element and then subjected to solid-phase sintering at 300 to 800°C for 10 to 24 h.

The maximum compaction density and the compression resilience ε can be adjusted by adjusting the raw materials, and the reaction temperature and time in each step.

In an embodiment, the present disclosure further provides a sodium ion battery, which includes a positive electrode according to the above embodiments, a negative electrode, and a separator, where the positive electrode and the negative electrode are respectively arranged on two opposite sides of the separator.

The type of the sodium ion battery includes, but is not limited to, a soft pack battery, a square battery, and a cylindrical battery.

Optionally, the negative electrode includes a current collector and a negative electrode material arranged on the current collector. After the negative electrode is formed, there is a negative electrode material layer on the current collector, which includes a negative electrode material, a conductive agent and a binder. The negative electrode material may be hard carbon.

Optionally, the content of the negative electrode material in the slurry is not less than 93% by weight, the content of the conductive agent is not higher than 3% by weight, and the content of the binder is not higher than 4% by weight. The areal density of the obtained negative electrode ranges from 150 to 210 g/m², and the compaction density of the negative electrode is not less than 0.9 g/cm³.

Optionally, the separator may be one of a conventional polyethylene (propylene) separator, a glued separator, and a ceramic separator.

Optionally, the sodium ion battery also includes an electrolyte solution, which contains an organic solvent, a sodium salt solute and an electrolyte additive.

Optionally, the organic solvent in the electrolyte solution may be one of ethylene carbonate (EC), propylene carbonate (PC), butyl carbonate (BC), γ- -butyrolactone (GBL), ethylene glycol dimethyl ether (DME), tetrahydrofuran (THF), methyl ethyl carbonate (EMC), dimethyl carbonate (DMC), diethyl carbonate (DEC), methyl formate (MF), methyl acetate (MA), dioxolane, and 4-Methyl-1,3-dioxolane (4-MeDOL), or a combination thereof. The sodium salt solute may be one of NaBF₄, NaClO₄, NaPF₆, NaAsF₆, NaCF₃SO₃, Na(CF₃SO₂)₂N, and NaC₄F₉SO₃, or a combination thereof. The electrolyte additive may be one of FEC, VC, PS, DTD, TEP, and TMP, or a combination thereof.

Optionally, the sodium ion battery may be a wound battery core, a stacked battery core, or a single battery core.

In an embodiment, the present disclosure further provides a battery assembly, which includes the sodium ion battery as described above. The battery assembly may be a battery pack or a battery set.

In an embodiment, the present disclosure further provides an electric system, which includes a battery assembly as described above and an electric device, where the battery assembly powders the electric device. Optionally, the electric system may be a vehicle or an energy storage power station.

In an embodiment, the present disclosure also provides a method for preparing a sodium ion battery, which at least includes the following steps:

Step S1: A positive electrode active material, a conductive agent, and a binder are uniformly dispersed in the solvent N-methylpyrrolidone (NMP) and uniformly coated on the surface of an aluminum foil (current collector), and dried to obtain a positive electrode.

Specifically, the positive electrode active material is uniformly dispersed with other auxiliary materials according to a ratio of positive electrode active material:PVDF:CNT:SP:NMP=97: 1:1.5:0.5:30, coated on the aluminum foil, and baked at 120°C to obtain the positive electrode, which is rolled to 3.0 g/cm³.

Step S2: A negative electrode active material, a conductive agent, and a binder are uniformly dispersed in deionized water as a solvent and uniformly coated on the surface of an aluminum foil (current collector), and dried to obtain a negative electrode.

Specifically, hard carbon, the conductive agent SP, and the binder SBR are evenly mixed in deionized water according to the ratio of 93:3:4, evenly coated on the surface of an aluminum foil, and baked at 110°C to obtain the negative electrode, which is rolled to 0.95 g/cm³.

Step S3: The positive electrode, a separator, and the negative electrode are sequentially wound or stacked to obtain an electrode core.

Step S4: After the electrode core is placed in a casing, an electrolyte solution is injected; and a complete secondary sodium ion battery is obtained after maturization, formation, aging and capacity grading.

Specifically, after the electrode core is placed in a casing, an electrolyte solution (solute: 1 mol/L NaPF₆, and solvent: EC:EMC = 1: 1 (v : v)+3 % FEC) is injected, and a complete secondary sodium ion battery is obtained after maturization, formation, aging and capacity grading.

The present disclosure will be further explained with examples and comparative examples. The present disclosure provides Examples 1 to 12 and Comparative Examples 1 to 5. The types of positive electrode active materials in the examples and comparative examples are shown in Table 1, and used to prepare batteries of various examples according to the manufacturing method of sodium ion battery mentioned above.

The compression resilience of the positive electrode active materials in the examples and comparative examples are tested respectively, and the cycle performance and energy density of the battery is tested. The specific test methods are as follows.

Compaction density and compression resilience: 1 g of the powder is filled in a standard container, vibrated at a frequency of 300 times/min until the density of the positive electrode active material reached a tap density, and then compressed at a constant speed (10 mm/min). The compaction density before recovery when the pressure is 5 tons is recorded as the maximum compaction density. The pressure is removed. When the movement of the compression surface stopped, the compaction density after recovery is determined, and the compression resilience of the powder is calculated. Test apparatus: Sunstest UTM7305.

Cycle performance test: The battery is charged to 4.0V at 1C, and then discharged to 1.5V at 1C. The cycle is repeated until SOH is 80%. The number of cycles is recorded (SOH= discharge capacity after cycles/first-cycle discharge capacity).

Specific test results are shown in Table 1.

**Table 1**

| | Chemical formula of material | Maximum compaction density (g/cm³) | Post-recovery compaction density (g/cm³) | Compression resilience ε (%) | Number of cycles |
|---|---|---|---|---|---|
| Example 1 | Na[Ni_{0.25}Co_{0.25}Mn_{0.25}Fe_{0.25}]O₂ | 3.58 | 3.25 | 9.2 | 1924 |
| Example 2 | NaFe_{0.5}Mn_{0.5}O₂ | 3.52 | 3.31 | 6 | 1648 |
| Example 3 | NaNi_{0.5}Mn_{0.5}O₂ | 3.54 | 3.24 | 8.5 | 1418 |
| Example 4 | NaNi_{1/3}Co_{1/3}Mn_{1/3}O₂ | 3.54 | 3.26 | 7.9 | 1414 |
| Example 5 | NaNi_{0.3}Co_{0.3}Fe_{0.4}O₂ | 3.41 | 3.13 | 8.2 | 1304 |
| Example 6 | Na_{0.96}Ni_{0.3}Cr_{0.3}Mn_{0.4}O₂ | 3.25 | 3.01 | 7.4 | 1234 |
| Example 7 | NaNi_{0.3}Fe_{0.3}Mn_{0.4}O₂ | 3.36 | 3.2 | 4.8 | 1218 |
| Example 8 | NaNi_{0.3}Mn_{0.3}Ti_{0.4}O₂ | 3.23 | 3.04 | 5.9 | 1076 |
| Example 9 | Na_{0.9}Ni_{0.4}Mn_{0.3}Ti_{0.3}O₂ | 3.26 | 3.15 | 3.4 | 823 |
| Example 10 | NaNi_{1/3}Fe_{1/3}Mn_{1/3}O₂ | 3.25 | 3.13 | 3.7 | 820 |
| Example 11 | Na_{7/9}[Cu_{0.22}Fe_{1/9}Mn_{2/3}]O₂ | 3.17 | 3.07 | 3.2 | 730 |
| Example 12 | Na[Cu_{1/9}Ni_{2/9}Fe_{1/3}Mn_{1/3}]O₂ | 3.09 | 2.99 | 3.2 | 718 |
| Comparative Example 1 | NaCu_{1/3}Fe_{1/3}Mn_{1/3}O₂ | 3.22 | 3.17 | 1.6 | 566 |
| Comparative Example 2 | NaNi_{1/3}Cr_{1/3}Mn_{1/3}O₂ | 3.07 | 3.04 | 1 | 523 |
| Comparative Example 3 | Na_{0.96}Ni_{0.4}Al_{0.1}Mn_{0.4}Ti_{0.1}O₂ | 3.59 | 3.58 | 0.3 | 389 |
| Comparative Example 4 | Na[Ni_{0.4}Cu_{0.1}Mn_{0.4}Ti_{0.1}]O₂ | 2.90 | 2.84 | 2 | 325 |
| Comparative Example 5 | Na[Ni_{0.4}Mn_{0.4}Ti_{0.2}]O₂ | 3.22 | 2.86 | 11.1 | 290 |

It can be known from the data in Table 1 that a greater resilient change of the powder before and after compression represents a better toughness of the material. On the contrary, lower compression resilience of the material indicates higher rigidity. Because of the larger radius of sodium ions, the cracking of the material is aggravated due to the change of the unit cell volume during the process of sodium intercalation. A material with greater resilience shows greater plasticity, so the material is more likely to maintain the original structure during the process of sodium intercalation, and thus has more excellent cycle performance.

In the description of the embodiments of the present disclosure, it should be understood that directions or location relationships indicated by the terms "center", "upper", "lower", "left", "right", "vertical", "horizontal", "inner", and "outer" are directions or location relationships shown based on the accompanying drawings, are merely used for the convenience of describing the present disclosure and simplifying the description, but are not used to indicate or imply that a device or an element must have a particular direction or must be constructed and operated in a particular direction, and therefore, cannot be understood as a limitation to the present disclosure.

Preferred embodiments of the present disclosure have been disclosed above; however, the scope of the claims of the present disclosure is not limited thereto. It can be understood by those skilled in the art that equivalent variations made to all or part of the process implementing the embodiments in accordance with the claims of the present disclosure shall fall within the scope of the present disclosure.

## Claims

1. A positive electrode active material, the positive electrode active material meeting the following condition:
compression resilience ε of the positive electrode active material ranging from 3% to 10%, wherein the compression resilience ε=1- (post-recovery compaction density/maximum compaction density).

2. The positive electrode active material according to claim 1, wherein the compression resilience ε of the positive electrode active material ranges from 5% to 10%.

3. The positive electrode active material according to claim 1 or 2, wherein the positive electrode active material meets the condition that a maximum compaction density of the positive electrode active material ranges from 3.0 g/cm³ to 3.6 g/cm³.

4. The positive electrode active material according to claim 3, wherein the positive electrode active material meets the condition that the maximum compaction density of the positive electrode active material ranges from 3.2 g/cm³ to 3.6 g/cm³.

5. The positive electrode active material according to any one of claims 1 to 4, comprising a sodium ion-layered transition metal oxide.

6. The positive electrode active material according to any one of claims 1 to 5, wherein the positive electrode active material has a general structural formula of NaₓAO₂, wherein A is one or more of Ni, Cu, Fe, Mn, Co, Cr, Li, Mo, Sn, Zn, Zr, Nb, Ru, Y, W, Al, Mg, Ti, Ca, Sr, Ir, Ba, and V, and 0.7≤x≤1.2.

7. The positive electrode active material according to claim 6, wherein x meets 0.9≤x≤1.02.

8. The positive electrode active material according to claim 1, wherein the positive electrode active material is one or more of a single crystal, a quasi-single crystal, and a polycrystal.

9. A positive electrode, comprising a current collector and a positive electrode active material according to any one of claims 1 to 8 arranged on the current collector.

10. A sodium ion battery, comprising a positive electrode according to claim 9.

11. A battery assembly, comprising a sodium ion battery according to claim 10.

12. An electric system, comprising a sodium ion battery according to claim 10 or a battery assembly according to claim 11.
